(19)

Europäisches
Patentamt
European
Patent Office
Office européen
des brevets

(11) **EP 4 273 963 A1**

(12) **EUROPEAN PATENT APPLICATION**
published in accordance with Art. 153(4) EPC

(43) Date of publication:
**08.11.2023  Bulletin 2023/45**

(21) Application number: **21969456.9**

(22) Date of filing: **29.12.2021**

(51) International Patent Classification (IPC):
***H01M 4/505*** $^{(2010.01)}$

(52) Cooperative Patent Classification (CPC):
**H01M 4/505; Y02E 60/10**

(86) International application number:
**PCT/CN2021/142610**

(87) International publication number:
**WO 2023/123088 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited**
**Ningde City, Fujian 352100 (CN)**

(72) Inventors:
• **CHENG, Cong**
**Ningde City, Fujian 352100 (CN)**

• **CHEN, Junguang**
**Ningde City, Fujian 352100 (CN)**
• **PEI, Haile**
**Ningde City, Fujian 352100 (CN)**
• **ZHANG, Shengwu**
**Ningde City, Fujian 352100 (CN)**
• **WANG, Xinghui**
**Ningde City, Fujian 352100 (CN)**
• **WANG, Ning**
**Ningde City, Fujian 352100 (CN)**

(74) Representative: **Gong, Jinping**
**CocreateIP**
**Eggenfeldenerstraße 56**
**81929 München (DE)**

(54) **WATER-BASED POSITIVE ELECTRODE PLATE, SECONDARY BATTERY COMPRISING SAME
AND ELECTRIC DEVICE**

(57)    The present application relates to an aqueous positive electrode sheet, including a current collector and a positive electrode active substance layer provided on at least one surface of the current collector, the positive electrode active substance layer includes an aqueous binder, where the porosity of a surface area of the positive electrode active substance layer is greater than the porosity of an inner area of the positive electrode active substance layer, and the average particle size of the positive electrode active material in the surface area is greater than the average particle size of the positive electrode active material in the inner area. The present application further relates to a secondary battery including the aqueous positive electrode sheet, a battery pack including the secondary battery, and a power consumption apparatus including the battery pack.

EP 4 273 963 A1

**Description**

**TECHNICAL FIELD**

The present application relates to the field of secondary batteries, and in particular, to an aqueous positive electrode sheet having an non-uniform structure and a secondary battery including the positive electrode sheet, a battery pack and a power consumption apparatus thereof.

**BACKGROUND**

Secondary batteries have become the most popular energy storage systems due to low cost, long life, and good safety thereof, which have been widely used in pure electric vehicles, hybrid electric vehicles, and smart grids. High safety and low cost are key directions for a sustainable development of power/energy storage battery market technologies. Positive electrode material lithium ion batteries of lithium iron phosphate (LFP) have great advantages in terms of safety due to characteristics of stable structure and high temperature decomposition resistance of a lithium iron phosphate material, and the lithium iron phosphate material does not include heavy metals, and the cost is also low, so it has developed rapidly in recent years.

At present, polyvinylidene fluoride (PVDF) is mostly used as a binder in the preparation of positive electrode sheets of secondary batteries, N-Methylpyrrolidone (NMP) is used together as a solvent, and at the same time, a conductive agent is added to form a slurry, then the slurry is coated on a surface of a current collector, dried and rolled to prepare the positive electrode sheet. However, both PVDF and NMP are petroleum derived chemical products, and their synthesis and post-treatment process are complex and have high energy consumption. Therefore, the cost of preparing electrodes with an oiliness system formed by PVDF and NMP organic solvents is relatively high. In addition, when preparing the electrode sheets of batteries, a large amount of NMP toxic gases may volatilize into the air, pollute the environment and cause harm to the human body, and a large amount of cost will be invested for recovery when NMP is used.

Based on this, the battery industry is also trying to develop an aqueous positive electrode system, but the current aqueous positive electrode sheet is still not satisfactory in terms of reducing a membrane resistance and improving battery dynamic performance. In the art, there is still a need to further improve the membrane resistance and battery dynamic performance thereof of the aqueous positive electrode sheet.

**SUMMARY**

The present application is made in view of the above subjects, which aims to provide an aqueous positive electrode sheet to solve a technical problem of reducing a membrane resistance and further improving dynamic performance of a battery.

In order to achieve the above aim, a first aspect of the present application provides an aqueous positive electrode sheet, including a current collector and a positive electrode active substance layer provided on at least one surface of the current collector, the positive electrode active substance layer including an aqueous binder, where the porosity of a surface area of the positive electrode active substance layer is greater than the porosity of an inner area of the positive electrode active substance layer, and the average particle size of the positive electrode active material in the surface area is greater than the average particle size of the positive electrode active material in the inner area.

In the present application, the thickness of the positive electrode active substance layer of the aqueous positive electrode sheet is set as H. In any embodiment, H may be 0.05-5 mm, optionally 0.1-0.5 mm. In the present application, the surface area of the positive electrode active substance layer refers to an area of a range from 0 to H/3 from the surface in the positive electrode active substance layer, and correspondingly, the inner area of the positive electrode active substance layer refers to an area of a range from 0 to H/3 from the current collector in the positive electrode active substance layer. By setting the surface area and the inner area of the positive electrode active substance layer to have different porosities and the positive electrode active materials in each area have different average particle sizes, the positive electrode active substance layer has an non-uniform structure in a vertical direction. The positive electrode sheet of the positive electrode active substance layer having the non-uniform structure reduces a resistance and impedance of a secondary battery including the positive electrode sheet, and improves the rate performance and capacity retention rate at the same time.

In any embodiment, the porosity in the area of H/3 from the surface in the positive electrode active substance layer is 10%-30%, and the porosity in the area of H/3 from the current collector in the positive electrode active substance layer is 5%-25%. In any embodiment, a ratio of the porosity in an area of H/3 from a surface in the positive electrode substance material layer to the porosity in an area of H/3 from the current collector in the positive electrode active substance layer is r1, and r1 is 1.05-6.5, optionally 1.2-2.5. In the present application, when the ratio r1 of the porosity in the surface area of the positive electrode active substance layer to the porosity in the inner area of the positive electrode active substance layer is within the above range, it may further reduce the membrane resistance and battery impedance, and improve the rate performance and capacity retention rate.

In any embodiment, the average particle size of the positive electrode active material in the area of H/3 from the surface in the positive electrode active substance layer is 0.8-2.5 $\mu$m, and the average particle size of the positive electrode active material in the area of H/3 from the current collector in the positive electrode active substance layer is 0.5-1.5 $\mu$m. In any embodiment, a ratio of the average particle size of the positive electrode active material in the area of H/3 from the surface in the positive electrode active substance layer to the average particle size of the positive electrode active material in the area of H/3 from the current collector in the positive electrode active substance layer is r2, and r2 is 1.05-5, optionally 1.2-2.5. In the present application, when the ratio r2 of the average particle size of the positive electrode active material in the surface area of the positive electrode active substance layer to the average particle size of the positive electrode active material in the inner area of the positive electrode active substance layer is within the above range, it may reduce the membrane resistance and battery impedance, and improve the rate performance and capacity retention rate.

In any embodiment, a value of a product r1 $\times$ r2 of the ratio r1 of the porosity and the ratio r2 of the average particle size of the positive electrode active material is 1.2 to 50, optionally 1.5 to 10, and further optionally 1.5 to 6. In the present application, when the product is within the above range, the performance of the secondary battery may be further improved. In addition, the ratio r1/r2 of the r1 to the r2 is 0.3 to 1.5, optionally 0.5 to 1.0. A range of the ratio of r1/r2 further reflects adjustment of a structure of the positive electrode active substance layer of the positive electrode sheet, thereby achieving the further adjustment of the performance of the battery.

In any embodiment, the layer in the area of H/3 from the surface in the positive electrode active substance layer includes the aqueous binder of 1 to 5 parts by weight and the conductive agent of 1 to 5 parts by weight, based on the total weight of the layer in the area; optionally, the layer comprises the aqueous binder of 2 to 4 parts by weight and the conductive agent of 2 to 3 parts by weight, based on the total weight of the layer in the area. In any embodiment, the positive electrode active substance layer comprises the conductive agent, the layer in the area of H/3 from the current collector in the positive electrode active substance layer includes the aqueous binder of 2 to 6 parts by weight and the conductive agent of 1 to 5 parts by weight, based on the total weight of the layer in the area; optionally, the layer comprises the aqueous binder of 3 to 5 parts by weight and the conductive agent of 2 to 3 parts by weight, based on the total weight of the layer in the area. By setting the parts by weight of the respective aqueous binder and conductive agent in the surface area and the inner area in the positive electrode active substance layer, it may adjust the structure of the positive electrode active substance layer and adjust the performance of the battery.

In any embodiment, the conductive agent includes one or more of conductive carbon black, superconducting carbon black, conductive graphite, acetylene black, Ketjen black, graphene, and carbon nanotubes. In any embodiment, the positive electrode active material includes one or more of lithium iron phosphate, lithium manganese phosphate, lithium cobalt phosphate, lithium iron manganese phosphate, lithium cobalt oxide, lithium nickel oxide, lithium manganese oxide, lithium nickel manganese oxide, lithium nickel cobalt manganese oxide, and lithium nickel cobalt aluminum oxide. By selecting the suitable conductive agent and positive electrode active material, it may further improve the performance of the positive electrode sheet and lithium ion secondary battery.

In any embodiment, the aqueous binder includes soluble polysaccharides and derivatives thereof, water-soluble or water-dispersed high polymers or mixtures thereof. In a further embodiment, the aqueous binder is methylcellulose and salt thereof, xanthan gum and salt thereof, chitosan and salt thereof, alginate and salt thereof, polyethyleneimine and salt thereof, polyacrylamide, acrylonitrile-acrylic acid copolymers and derivatives thereof, or mixtures thereof. In any embodiment, the aqueous binder is a compound mixture of the xanthan gum and the polyethyleneimine, a ratio of the xanthan gum to the polyethyleneimine may be 2:1-1:15, optionally 1:2-1:14; optionally, the average molecular weight Mn of the xanthan gum is 300000-2000000 g/mol, and the average molecular weight Mn of the polyethyleneimine is 2000-50000 g/mol. Compared with an oiliness binder, the aqueous binder is more environmentally friendly and safer to use. In addition, a combination of specific aqueous binders may further improve the performance of the battery.

In any embodiment, a membrane resistance of the aqueous positive electrode sheet is 0.3 to 2 $\Omega$, optionally 0.3 to 1 $\Omega$. The aqueous positive electrode sheet of the present invention has relatively low membrane resistance, which effectively improves the performance of battery using the electrode sheet.

In any embodiment, the positive electrode active substance layer of the aqueous positive electrode sheet is formed by multi-layer die head extrusion coating process. The positive electrode active substance layer formed by the process may easily form a layer having the non-uniform structure without obvious layering, and polarization of a film layer is small, which is conducive to improving dynamic performance of the battery.

A second aspect of the present application provide a secondary battery, including the aqueous positive electrode sheet selected from the first aspect of the present application.

A third aspect of the present application provides a battery pack, including the secondary battery selected from the second aspect of the present application.

A fourth aspect of the present application provides a power consumption apparatus, including the secondary battery selected from the second aspect of the present application or the battery pack selected from the third aspect of the present application.

**BRIEF DESCRIPTION OF DRAWINGS**

In order to illustrate the technical solutions of the present application more clearly, the following will briefly introduce the drawings used in embodiments of the present application. Apparently, the drawings described below are merely some embodiments of the present application, and those skilled in the art may still derive other drawings from these drawings without creative labor.

FIG. 1 is a structural schematic diagram of a side view of an aqueous positive electrode sheet according to an embodiment of the present application.
FIG. 2 is a schematic diagram of a lithium ion secondary battery according to an embodiment of the present application.
FIG. 3 is an exploded view of the lithium ion secondary battery according to the embodiment of the present application shown in FIG. 2.
FIG. 4 is a schematic diagram of a battery pack according to an embodiment of the present application.
FIG. 5 is an exploded view of the battery pack according to the embodiment of the present application shown in FIG. 4.
FIG. 6 is a schematic diagram of a device in which a battery pack is used as a power source according to an embodiment of the present application.

DESCRIPTION OF REFERENCE SIGNS

1 battery pack
2 upper box body
3 lower box body
4 battery module
5 lithium ion secondary battery
51 housing
52 electrode assembly
53 cover plate

**DESCRIPTION OF EMBODIMENTS**

For the sake of brevity, the present application specifically discloses some numerical ranges. However, any lower limit may be combined with any upper limit to form an unspecified range, and any lower limit may be combined with any other lower limits to form an unspecified range, and likewise any upper limit may be combined with any other upper limits to form an unspecified range. In addition, each individually disclosed point or individual value may serve as a lower or upper limit by itself in combination with any other points or individual values or with other lower or upper limits to form an unspecified range.

At present, based on manufacturing cost and recovery cost of an oiliness system. The battery industry has begun to attempt to develop an aqueous positive electrode system. On the one hand, it can avoid use of an organic solvent NMP and reduce harm to environment and human beings. On the other hand, it does not relate to extensive use of fluoropolymer PVDF and complicated recovery of the NMP solvent. It can achieve large-scale cost reduction applications due to low battery production cost.

Among them, development and application of aqueous binders is very important. The binder binds a positive electrode material and a conductive agent to a metal current collector (such as aluminum foil) to prepare a battery electrode sheet, which can enhance the contact between the active material and conductive agent and the active material and current collector, stabilize a structure of the electrode sheet, and is a connection medium of electrode active materials. Its characteristics will directly affect cycle performance, fast charge and discharge capability, high temperature performance, DCR of a lithium battery. Although deionized water may be used instead of the solvent NMP in the aqueous binder system, water-soluble binders for secondary batteries developed in the market such as styrene-butadiene emulsion (SBR), hydroxymethyl cellulose (CMC), polyacrylate (PAA), and polytetrafluoroethylene emulsion (PTFE) generally have problems, such as non-uniform dispersion of solid materials, poor consistency and low stability of aqueous positive electrode slurries, and prone to sedimentation, and poor bond strength of electrode sheets and high brittleness, such that the requirements for the use of lithium ion secondary batteries cannot be satisfied. Although there are reports in the industry that the brittleness of electrode sheets may be improved by plasticizers, the effect is limited.

At the same time, in the field of secondary batteries, with the development of science and technology, the requirements for energy density of a battery are getting higher and higher. To increase the energy density of the battery, although materials, electrolytic solutions, and membranes can be optimized and improved, design and manufacturing process of the battery electrode sheets is also an essential part of improving the energy density of the battery. Among them, increasing the coating amount per unit area of the electrode sheet or increasing the proportion of active materials in a formula are effective ways to increase the energy density of the battery. However, as the thickness of the positive electrode sheet or the proportion of the active materials increases, diffusion dynamics of lithium ions is limited at a higher rate or lower temperature, a utilization rate of electrode active substances decreases accordingly, and the energy density of the battery is impaired. Especially in the aqueous positive electrode technologies, residual solvent moisture will further deteriorate dynamics performance of battery.

The inventors have found through research that by setting a positive electrode active substance layer of the aqueous positive electrode sheet to an non-uniform structure, it has different porosities and average particle sizes of the positive electrode active material in a surface area and an inner area, such that it can significantly reduce the membrane resistance of the positive electrode sheet and improve the dynamic performance of the secondary battery. Without being bound by any theory, the inventors believe that due to different pore structures of the electrode sheet, the porosity of a film layer gradually increases from a side close to the current collector to a surface of film layer, and at the same time, the average particle size of the positive electrode active material also gradually increases from the side close to the current collector to the surface of the film layer, resulting in different capillary tensions in a vertical direction, which is more conducive to removal of residual moisture in the electrode sheet.

Specifically, a first aspect of the present application provides an aqueous positive electrode sheet, which includes a current collector and a positive electrode active substance layer provided on at least one surface of the current collector, the positive electrode active material layer includes an aqueous binder, where the porosity of a surface area of the positive electrode active substance layer is greater than the porosity of an inner area of the positive electrode active substance layer, and the average particle size of the positive electrode active material in the surface area is greater than the average particle size of the positive electrode active material in the inner area.

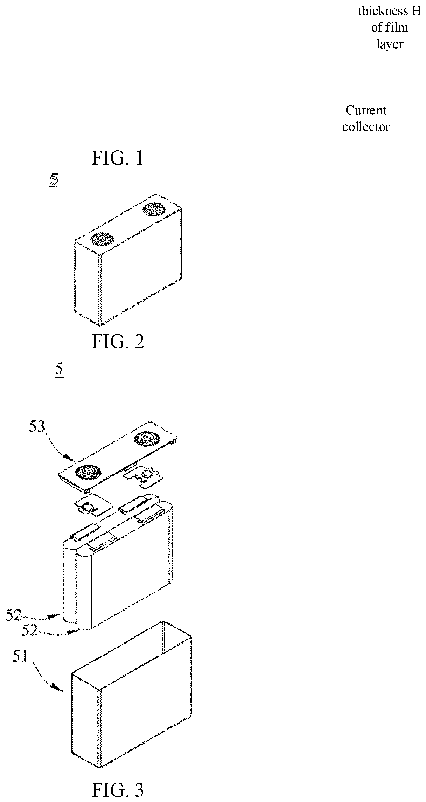

In the present application, the thickness of the positive electrode active substance layer of the aqueous positive electrode sheet is set as H, as shown in FIG. 1. In any embodiment, H may be 0.05-5 mm, optionally 0.1-0.5 mm. In the present application, the surface area of the positive electrode active substance layer refers to an area of 0 to H/3 from the surface in the positive electrode active substance layer, and correspondingly, the inner area of the positive electrode active substance layer refers to an area of 0 to H/3 from the current collector in the positive electrode active substance layer. The positive electrode current collector may adopt metal foil or a composite current collector. For example, as the metal foil, aluminum foil may be adopted. The composite current collector may include a polymer material base layer and a metal layer formed on at least one surface of the polymer material base layer. The positive electrode current collector and the positive electrode active substance layer are bonded by an aqueous binder, which may effectively reduce environmental pollution, reduce hazards to production and users, and reduce production cost compared with an oiliness binder. Especially for the thicker positive electrode sheet, such as the thickness of 3-10 mm, adopting the aqueous binder and the positive electrode active substance layer with the non-uniform structure as defined above may significantly reduce the membrane resistance of the positive electrode sheet and an impedance of the battery, while improving rate performance and capacity retention rate of the secondary battery including the positive electrode sheet.

In some embodiments, the porosity in the area of H/3 from the surface in the positive electrode active substance layer is 10%-30%, and the porosity in the area of H/3 from the current collector in the positive electrode active substance layer is 5%-25%. In some embodiments, a ratio of the porosity in an area of H/3 from a surface in the positive electrode active substance layer to the porosity in an area of H/3 from a current collector in the positive electrode active substance layer is r1, and r1 is 1.05-6.5, optionally 1.2-2.5. In the positive electrode active substance layer of the aqueous positive electrode sheet of the present application, since the porosity of the surface area is greater than the porosity of the inner area, r1 is a value greater than 1. If r1 is too small, the structure of the positive electrode active substance layer is not even enough to achieve an effect thereof. If r1 is too large, the membrane resistance tends to increase instead. Therefore, to further improve the performance of the positive electrode sheet and battery, it is conducive to setting r1 in an appropriate range, which may reduce the resistance and impedance of the battery and improve the rate performance and capacity retention rate.

In some embodiments, the average particle size of the positive electrode active material in the area of H/3 from the surface in the positive electrode active substance layer is 0.8-2.5 $\mu$m, and the average particle size of the positive electrode active material in the area of H/3 from the current collector in the positive electrode active substance layer is 0.5-1.5 $\mu$m. In some embodiments, a ratio of the average particle size of the positive electrode active material in the area of H/3 from the surface in the positive electrode active substance layer to the average particle size of the positive electrode active material in the area of H/3 from the current collector in the positive electrode active substance layer is r2, and r2 is 1.05-5, optionally 1.2-2.5. In the positive electrode active substance layer of the aqueous positive electrode sheet of the present application, since the average particle size of the positive electrode active material of the surface area is greater than the average particle size of the positive electrode active material of the inner area, r2 is a value greater than 1. If r2 is too small, the structure of the positive electrode active substance layer is not even enough to achieve an effect thereof. If r2 is too large, the membrane resistance tends to increase instead. Therefore, to further improve the performance of the positive electrode sheet and battery, it is conducive to setting r2 in an appropriate range, which may reduce the resistance and impedance of the battery and improve the rate performance and capacity retention rate.

In some embodiments, a value of a product r1×r2 of the ratio r1 of the porosities and the ratio r2 of the average particle sizes of the positive electrode active materials is 1.2 to 50, optionally 1.5 to 10, and further optionally 1.5 to 6. A value of the product r1×r2 of r1 and r2 reflects a degree of overall structural non-uniformness in the positive electrode active substance layer. To further reduce the membrane resistance and improve the performance of the secondary battery, the value of the product r1×r2 is also advantageously set within a specific range, and within the range the resistance of the positive electrode sheet is more significantly reduced, while the capacity retention rate of the battery has also been significantly improved. In addition, the ratio r1/r2 of the ratios r1 to r2 is 0.3 to 1.5, optionally 0.5 to 1.0. A range of the ratio of r1/r2 further reflects adjustment of the structure of the positive electrode active substance layer of the positive electrode sheet, thereby further adjusting the performance of the battery.

In some embodiments, the layer in the area of H/3 from the surface in the positive electrode active substance layer includes the aqueous binder of 1 to 5 parts by weight and the conductive agent of 1 to 5 parts by weight, based on the total weight of the layer in the area; optionally, the layer includes the aqueous binder of 2 to 4 parts by weight and the conductive agent of 2 to 3 parts by weight, based on the total weight of the layer in the area. In some embodiments, the layer in the area of H/3 from the current collector in the positive electrode active substance layer includes the aqueous binder of 2 to 6 parts by weight and the conductive agent of 1 to 5 parts by weight, based on the total weight of the layer in the area; optionally, the layer includes the aqueous binder of 3 to 5 parts by weight and the conductive agent of 2 to 3 parts by weight, based on the total weight of the layer in the area. By setting the parts by weight of the aqueous binder and conductive agent in the surface area and the inner area of the positive electrode active substance layer, it may adjust the structure of the positive electrode active substance layer and adjust the performance of the battery.

In some embodiments, the conductive agent includes one or more of conductive carbon black, superconducting carbon black, conductive graphite, acetylene black, Ketjen black, graphene, and carbon nanotubes. In any embodiment, the positive electrode active material includes one or more of lithium iron phosphate, lithium manganese phosphate, lithium cobalt phosphate, lithium iron manganese phosphate, lithium cobalt oxide, lithium nickel oxide, lithium manganese oxide, lithium nickel manganese oxide, lithium nickel cobalt manganese oxide, and lithium nickel cobalt aluminum oxide. By selecting the suitable conductive agent and positive electrode active material, it can further improve the performance of the positive electrode sheet and lithium ion secondary battery.

In some embodiments, the aqueous binder includes soluble polysaccharides and derivatives thereof, water-soluble or water-dispersed high polymers or mixtures thereof. In a further embodiment, the aqueous binder is methylcellulose and salt thereof, xanthan gum and salt thereof, chitosan and salt thereof, alginate and salt thereof, polyethyleneimine and salt thereof, polyacrylamide, acrylonitrile-acrylic acid copolymers and derivatives thereof, or mixtures thereof. In some embodiments, the aqueous binder is a compound mixture of the xanthan gum and the polyethyleneimine, a ratio of the xanthan gum to the polyethyleneimine may be 2:1-1:15, optionally 1:2-1:14; optionally, the average molecular weight Mn of the xanthan gum is 300000-2000000 g/mol, and the average molecular weight Mn of the polyethyleneimine is 2000-50000 g/mol. Compared with the oiliness binder, the aqueous binder is more environmentally friendly and safer to use, while improving the performance of the battery.

The aqueous positive electrode sheet may be formed by coating the aqueous positive electrode slurry on the positive electrode current collector. In some embodiments, the aqueous positive electrode slurry may include 88-98 parts of positive electrode active substance, 0.2-3 parts of thickener, 1-10 parts of aqueous binder, 0.5-8 parts of conductive agent, and the balance is adjusted to solid content of 40-100% with deionized water. Optionally, the aqueous positive electrode slurry may include 80-96 parts of positive electrode active substance, 0.2-1 part of thickener, 2-6 parts of aqueous binder, 1-5 parts of conductive agent, and the balance is adjusted to the solid content of 50-100% with the deionized water. A coating method of the aqueous positive electrode slurry can be extrusion coating. In some embodiments, the aqueous positive electrode sheet may be formed by coating the aqueous positive electrode slurry on the positive electrode current collector in a manner of multi-layer die head extrusion coating. In this manner, the aqueous positive electrode slurry is simultaneously extrusion-coated using multiple die heads to form multiple extrusion-coated layers, and the number of the layers corresponding to the number of the die heads used. For example, it can be coated using two, three, four or more layers of die head. Optionally, three-layer die head extrusion coating is used. In three-layer die head extrusion coating process, the aqueous positive electrode slurry is divided into three layers of 1/2/3, corresponding to upper, middle and lower layers of the die head, respectively. Each layer of extrusion die head corresponds to a corresponding channel, and different channels may correspond to aqueous positive electrode slurries composed of different formulations. According to the requirements of dynamic performance, the type, ratio or addition order of the positive electrode active substance, conductive agent and aqueous binder in the formula may be freely adjusted to achieve an non-uniform structure design of the electrode sheet in a thickness direction. Especially during the coating, due to a special structure design of large pores in the upper layer and small pores in the lower layer (porosity and size) thereof, it is more conducive to evaporation of moisture and infiltration of electrolytic solution. Furthermore, although the positive electrode active substance layer prepared by the multi-layer die head extrusion coating process has the non-uniform structure design in the thickness direction, it has no obvious layering and small polarization of a film layer, which is conducive to improving the dynamic performance of the battery.

In some embodiments, a membrane resistance of the aqueous positive electrode sheet is 0.3 to 2 S2, optionally 0.3 to 1 $\Omega$. The aqueous positive electrode sheet of the present invention has a relatively low membrane resistance, which effectively improves the performance of the battery using the electrode sheet.

A second aspect of the present application provides a secondary battery, which includes the aqueous positive electrode sheet according to the first aspect of the present application. In some implementations, the secondary battery is a lithium ion secondary battery. The lithium ion secondary battery has a positive electrode sheet, a negative electrode sheet, a separator, and an electrolytic solution, where the positive electrode sheet includes a positive electrode current collector and a positive electrode active substance layer provided on at least one surface of the positive electrode current collector, and the positive electrode active substance layer includes a positive electrode active material and a conductive agent.

A battery cell of the secondary battery will be described in detail below.

Generally, a lithium ion secondary battery includes a positive electrode sheet, a negative electrode sheet, a separator, and an electrolyte. During charging and discharging of a battery, active ions are intercalated and disintercalated back and forth between the positive electrode sheet and the negative electrode sheet. The separator is provided between the positive electrode sheet and the negative electrode sheet for separation. The electrolyte plays the role of conducting the ions between the positive electrode sheet and the negative electrode sheet.

[Electrolytic Solution]

An electrolytic solution plays the role of conducting ions between a positive electrode sheet and a negative electrode sheet. The electrolytic solution includes an electrolyte salt and a solvent.

In the present application, the electrolyte salt may be a common electrolyte salt in lithium ion secondary batteries, such as lithium salt, including the above lithium salt as a high thermal stability salt, lithium salt as a low impedance additive, or lithium salt inhibiting aluminum foil corrosion. As an example, the electrolyte salt may be selected from more than one of $LiPF_6$ (lithium hexafluorophosphate), $LiBF_4$ (lithium tetrafluoroborate), $LiAsF_6$ (lithium hexafluoroarsenate), LiFSI (lithium bis(fluorosulfonyl)imide), LiTFSI (bistrifluoromethanesulfonimide lithium), LiTFS (lithium trifluoromethanesulfonate), LiDFOB (lithium difluoro(oxalato)borate), $LiPO_2F_2$ (lithium difluorophosphate), LiDFOP (lithium difluorodifluorooxalate phosphate), $LiSO_3F$ (lithium fluorosulfonate), NDFOP (difluorodioxalate), $Li_{2F}(SO_2N)_2SO_2F$, KFSI, CsFSI, $Ba(FSI)_2$ and $LiFSO_2NSO_2CH_2CH_2CF_3$.

The type of the solvent is not particularly limited, and may be selected according to the actual requirements. In some embodiments, the solvent is a non-aqueous solvent. Optionally, the solvent may include one or more of chain carbonate, cyclic carbonate, and carboxylate ester. In some embodiments, the solvent may be selected from one or more of ethylene carbonate (EC), propylene carbonate (PC), methyl ethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, sulfolane (SF), methyl sulfone (MSM), methyl ethyl sulfone (EMS), and diethyl sulfone (ESE).

In some embodiments, the electrolytic solution further optionally includes other additives. For example, the additive may include a negative electrode film-forming additive, or may include a positive electrode film-forming additive, or may further include an additive that can improve specific performance of the battery, such as, an additive for improving overcharge performance of the battery, an additive for improving high temperature performance of the battery, and an additive for improving low temperature performance of the battery. As an example, the additive is selected from at least one of cyclic carbonate compounds containing unsaturated bonds, halogen-substituted cyclic carbonate compounds, sulfate compounds, sulfite compounds, sultone compounds, disulfonic acid compounds, nitrile compounds, aromatic compounds, isocyanate compounds, phosphazene compounds, cyclic acid anhydride compounds, phosphite compounds, phosphoric ester compounds, borate ester compound, and carboxylate ester compounds.

[Positive Electrode Sheet]

A positive electrode sheet includes a positive electrode current collector and a positive electrode active substance layer provided on at least one surface of the positive electrode current collector, and the positive electrode active substance layer includes a positive electrode active material and a conductive agent.

As an example, the positive electrode current collector has two surfaces opposite in its own thickness direction, and the positive electrode active substance layer is provided on either or both of the two opposite surfaces of the positive electrode current collector.

In the lithium ion secondary battery of the present application, the positive electrode current collector may be metal foil or a composite current collector. For example, as the metal foil, aluminum foil may be adopted. The composite current collector may include a polymer material base layer and a metal layer formed on at least one surface of the polymer material base layer. The composite current collector may be formed by forming a metal material (such as aluminium, aluminium alloys, nickel, nickel alloys, titanium, titanium alloys, silver and silver alloys, etc.) on the polymer material base layer (such as polypropylene (PP), polyethylene terephthalate (PET), polybutylene terephthalate (PBT), polystyrene (PS), polyethylene (PE), and other substrates).

The positive electrode active substance layer provided on the surface of the positive electrode current collector includes a positive electrode active material. The positive electrode active material used in the present application may have any conventional positive electrode active material used in the secondary battery. In some embodiments, the positive electrode active material may include one or more selected from lithium transition metal oxide, lithium containing phosphate with olivine structure, and respective modified compounds thereof. Examples of lithium transition metal oxides may include, but are not limited to, one or more of lithium cobalt oxides, lithium nickel oxides, lithium manganese oxides, lithium nickel cobalt oxides, lithium manganese oxides, lithium nickel manganese oxides, lithium nickel cobalt manganese oxides, lithium nickel cobalt aluminum oxide, and modified compounds thereof. Examples of lithium containing phosphates with olivine structure may include, but are not limited to, one or more of lithium iron phosphate, composite materials of lithium iron phosphate and carbon, lithium manganese phosphate, composite materials of lithium manganese phosphate and carbon, lithium manganese iron phosphate, and composite materials of lithium manganese iron phosphate and carbon, and modified compounds thereof. These materials are all commercially available. Carbon may be coated on the surface of the positive electrode active material.

The positive electrode active substance layer optionally includes a conductive agent. However, the type of the conductive agent is not specifically limited, and those skilled in the art can select it according to the actual requirements. As an example, the conductive agent for the positive electrode material may be selected from one or more of superconducting carbon, acetylene black, carbon black, Ketjen black, carbon dots, carbon nanotubes, graphene, and carbon nanofibers.

The positive electrode active substance layer may further optionally include a binder. As an example, the binder may be one or more of styrene butadiene rubber (SBR), aqueous acrylic acid resin, polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

In the present application, the positive electrode sheet may be prepared according to methods known in the art. As an example, the positive electrode material coated with carbon, conductive agent, and binder may be dispersed in a solvent (such as N-methylpyrrolidone (NMP)) to form an even positive electrode slurry, then the positive electrode slurry is coated on the positive electrode current collector, and after drying, cold pressing and other processes, the positive electrode sheet is obtained.

[Negative Electrode Sheet]

A negative electrode sheet includes a negative electrode current collector and a negative electrode material layer provided on at least one surface of the negative electrode current collector, and the negative electrode material layer includes a negative electrode active substance.

As an example, the negative electrode current collector has two surfaces opposite in its own thickness direction, and the negative electrode material layer is provided on either or both of the two opposite surfaces of the negative electrode current collector.

In a lithium ion secondary battery of the present application, the negative electrode current collector may be metal foil or a composite current collector. For example, as the metal foil, copper foil may be adopted. The composite current collector may include a polymer material base layer and a metal layer formed on at least one surface of the polymer material base layer. The composite current collector may be formed by forming a metal material (such as copper, copper alloys, nickel, nickel alloys, titanium, titanium alloys, silver and silver alloys, etc.) on the polymer material base layer (such as polypropylene (PP), polyethylene terephthalate (PET), polybutylene terephthalate (PBT), polystyrene (PS), polyethylene (PE), and other substrates).

In the lithium ion secondary battery of the present application, the negative electrode material layer typically includes a negative electrode active substance, an optional binder, an optional conductive agent, and other optional additives, which is typically formed by coating and drying a negative electrode slurry. The negative electrode slurry is typically formed by dispersing the negative electrode active substance and optional conductive agent and binder in a solvent and evenly stirring. The solvent may be N-methylpyrrolidone (NMP) or deionized water.

A specific type of the negative electrode active substance is not limited, the active substance known in the art that may be used as a negative electrode of the lithium ion secondary battery may be adopted, and those skilled in the art may select it according to the actual requirements. As an example, the negative electrode active substance may be selected from one or more of graphite, soft carbon, hard carbon, mesocarbon microspheres, carbon fibers, carbon nanotubes, elemental silicon, silicon oxide compounds, silicon carbon composites, and lithium titanate.

As an example, the conductive agent may be selected from one or more of superconducting carbon, acetylene black, carbon black, Ketjen black, carbon dots, carbon nanotubes, graphene, and carbon nanofibers.

As an example, the binder may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

Other optional adjuvants are, for example, thickeners (such as carboxymethylcellulose sodium (CMC-Na)).

[Separator]

A lithium ion secondary battery adopting an electrolytic solution further includes a separator. The separator is provided between the positive electrode sheet and the negative electrode sheet for separation. The type of the separator is not particularly limited in the present application, and any well known porous-structure separator having good chemical stability and mechanical stability may be selected. In some embodiments, a material of the separator may be selected from one or more of glass fiber, nonwoven fabric, polyethylene, polypropylene, and polyvinylidene fluoride. The separator may be a single-layer thin film or a multi-layer composite thin film, which is not particularly limited. When the separator is the multi-layer composite thin film, each layer may have the same or different materials, which is not particularly limited.

In some embodiments, the positive electrode sheet, the negative electrode sheet, and the separator may prepare an electrode assembly by a winding process or a lamination process.

In some embodiments, the lithium ion secondary battery may include an outer packaging. The outer packaging may be used to seal and package the above electrode assembly and electrolyte.

In some embodiments, the outer packaging of the lithium ion secondary battery may be a hard housing, such as a hard plastic housing, an aluminum housing, a steel housing, and the like. The outer packaging of the lithium ion secondary battery may also be a soft packaging, such as, a bag type soft packaging. A material of the soft packaging may be plastic, for example, polypropylene (PP), polybutylene terephthalate (PBT), and polybutylene succinate (PBS) may be listed.

The present application has no particular limitation on a shape of the lithium ion secondary battery, which may be a cylinder, a square, or any other shape. For example, FIG. 2 is a lithium ion secondary battery 5 in a square structure as an example.

In some embodiments, with reference to FIG. 3, an outer packaging may include a housing 51 and a cover plate 53. Among them, the housing 51 may include a bottom plate and side plates connected to the bottom plate, and the bottom plate and side plates are enclosed to form an accommodating cavity. The housing 51 has an opening communicating with the accommodating cavity, and the cover plate 53 can cover the opening to close the accommodating cavity. The positive electrode sheet, the negative electrode sheet, and the separator may form an electrode assembly 52 through a winding process or a lamination process. The electrode assembly 52 is sealed and packaged in the accommodating cavity. An electrolytic solution is infiltrated into the electrode assembly 52. The number of electrode assemblies 52 included in the lithium ion secondary battery 5 may be one or more, which may be selected by those skilled in the art according to the specific actual requirements.

In some embodiments, lithium ion secondary batteries may be assembled into a battery module 4, the number of lithium ion secondary batteries included in the battery module 4 may be one or more, and the specific number may be selected by those skilled in the art according to application and capacity of the battery module 4. In the battery module 4, multiple lithium ion secondary batteries 5 may be provided along a length direction of the battery module in sequence. Certainly, they may also be arranged in any other manner. Further, the multiple lithium ion secondary batteries 5 may be fixed with fasteners. Optionally, the battery module 4 may further include a housing having an accommodating space, and the multiple lithium ion secondary batteries 5 are accommodated in the accommodating space.

In some embodiments, the above lithium ion secondary batteries 5 or battery modules 4 may be assembled into a battery pack 1, the number of lithium ion secondary batteries 5 or battery modules 4 included in the battery pack 1 may be selected by those skilled in the art according to application and capacity of the battery pack 1.

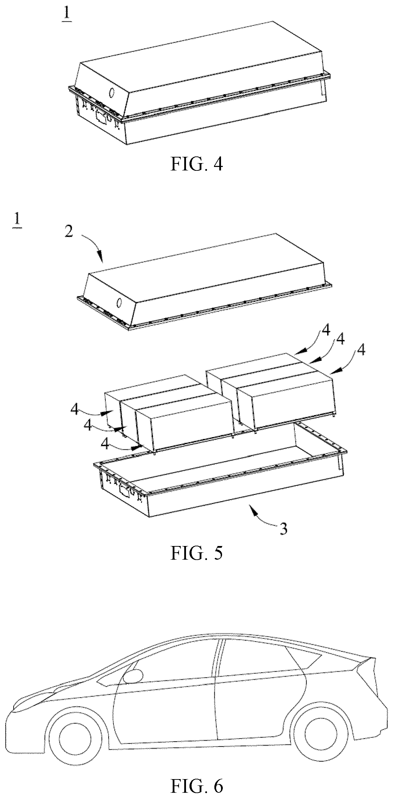

FIG. 4 and FIG. 5 are a battery pack 1 as an example. With reference to FIG. 4 and FIG. 5, the battery pack 1 may include a battery box and multiple battery cells provided in the battery box. The battery box includes an upper box body 2 and a lower box body 3, the upper box body 2 can cover the lower box body 3 and form an enclosed space for accommodating the battery cells.

In addition, the present application further provides an apparatus, and the apparatus includes the battery pack provided by the present application. The battery pack may be used as a power source of the apparatus, or as an energy storage unit of the apparatus. The apparatus may be, but is not limited to, mobile devices (such as, mobile phones or a notebook computers), electric vehicles (such as, full electric vehicles, hybrid electric vehicles, plug-in hybrid electric vehicles, electric bicycles, electric scooters, electric golf carts, electric trucks), electric trains, ships and satellites, energy storage systems, and the like.

As the apparatus, the battery pack may be selected according to the usage requirements thereof.

FIG. 6 is an apparatus as an example. The apparatus is a full electric vehicle, a hybrid electric vehicle, a plug-in hybrid electric vehicle, and the like. To satisfy the requirements of the apparatus for high power and high energy density of a lithium ion secondary battery, a battery pack or a battery module may be adopted.

Embodiments

Embodiments of the present application will be described below. The embodiments described hereinafter are illustrative and merely used to explain the present application, and should not be understood as limiting the present application. If no specific technique or condition is indicated in the embodiments, it shall be carried out in accordance with the technique or condition described in literatures in the art or in accordance with a product specification. Reagents or instruments used without indicating manufacturers are all conventional products that may be acquired from the market.

Embodiment 1

Preparation of Positive Electrode Sheet

Mix a positive electrode active material of lithium iron phosphate LPF, a conductive agent of conductive carbon black, and an aqueous binder according to a weight ratio of 96:1:3, where the aqueous binder adopts a compound mixture of xanthan gum (with the molecular weight of about 1,000,000 g/mol, purchased from Shanghai Aladdin Biochemical Technology Co., Ltd.) and polyethyleneimine (with the molecular weight of about 10000g/mol, purchased from Shanghai Aladdin Biochemical Technology Co., Ltd.), with a compound weight ratio of 1:1, evenly stir and mix the balance with a solvent of deionized water to acquire a positive electrode slurry with solid content of 50%, then evenly coat the positive electrode slurry on an aluminum foil positive electrode current collector. A coating die head adopts a three-layer co-extrusion die head, then combines drying process conditions to acquire a film layer (that is, a positive electrode active substance layer). The thickness of the film layer H is 0.2 mm. The average particle size D50 of a positive electrode active material of a surface area (that is, in an area of H/3 from a surface in the film layer) and an inner area (that is, in an area of H/3 from a current collector in the film layer) in the film layer is 0.8 $\mu$m and 0.5 $\mu$m, respectively, and the porosity of the surface area and the inner area in the film layer is 10.3% and 5.1%, respectively. Subsequently, a positive electrode sheet is acquired after cold pressing and slitting.

Preparation of Negative Electrode Sheet

Dissolve an active substance of artificial graphite, a conductive agent of carbon black, a binder of styrene butadiene rubber (SBR), and a thickener of carboxymethylcellulose sodium (CMC) in a solvent of deionized water according to a mass ratio of 96.2:0.8:0.8:1.2, evenly mix them to acquire a negative electrode slurry, then evenly coat the negative electrode slurry on copper foil of a negative electrode current collector for many times, and acquire a negative electrode sheet after drying, cold pressing, and slitting.

Preparation of Electrolytic Solution

In an argon atmosphere glove box ($H_2O<0.1$ppm, $O_2<0.1$ppm), evenly mix an organic solvent of ethylene carbonate (EC)/ethyl methyl carbonate (EMC) according to a volume ratio of 3/7, then add 12.5% $LiPF_6$ lithium salt and dissolve it in the organic solvent, and evenly stir to acquire an electrolytic solution.

Separator

A 2 $\mu$m thick ceramic coating is used as a separator after being coated with a PE porous thin film.

Embodiments 2-16 and Comparative Examples 1-3

Except that the porosity of the surface area and the inner area and the average particle size of the positive electrode active substance are different, other steps are the same as in embodiment 1.

Comparative example 4

NMP is adopted as a solvent to prepare a slurry of a positive electrode sheet, other steps are the same as in comparative example 1.

Preparation of Lithium Ion Battery

Stack the positive electrode sheet, the separator, and the negative electrode sheet of embodiment 1 in sequence, such that the separator is between the positive and negative electrode sheets to play the role of separation, then wind them to acquire a bare battery, weld tabs to the bare battery, and place the bare battery into an aluminum housing, and bake it at 80 °C to remove water, then inject an electrolytic solution and seal to acquire an uncharged battery. The uncharged battery is then subjected to standing, hot and cold pressing, formation, shaping, capacity testing and other processes in sequence to acquire the lithium ion secondary battery product of embodiment 1.

The lithium ion secondary battery products of embodiments 2-16 and comparative examples 1-4 are also prepared according to the above steps.

Preparation parameters of the positive electrode sheets and lithium ion secondary batteries of embodiments 1-16 and comparative examples 1-4 are listed in Table 1 below.

Test methods for each parameter of a positive electrode sheet and a battery is as follows:

1) Porosity: a film layer of an electrode sheet is peeled off by tape, and the porosity of the electrode sheet is converted by testing volume and weight of the electrode sheet. A test is conducted according to GB/T 24586-2009 True Density Method Porosity Analysis General Rules.

2) Measurement and determination of value of average particle size D50 of positive electrode active substance: use a laser particle size analyzer of a device model Malvern 2000 (MasterSizer 2000), refer to standard process: GB/T19077-2016/ISO 13320:2009, where specific test process is as follows: take an appropriate amount of sample to be tested (sample concentration should be 8-12% of shading), add 20ml deionized water, while external ultrasonic treatment for 5 minutes (53 KHz/120 W), to ensure that the sample is completely dispersed, then test the sample according to a GB/T19077-2016/ISO 13320:2009 standard.

3) Test of membrane resistance of positive electrode sheet

At room temperature, use a CRM-01 membrane resistance tester to test the membrane resistance along a thickness direction of the positive electrode sheet. Test each set 5 times and take an average value.

4) Test of direct current impedance of battery

Test process of the direct current impedance of the battery is as follows: at 25 °C, charge the battery corresponding to embodiments with a constant current of 1/3 C to 3.65 V, then charge it with a constant voltage of 3.65 V to a current of 0.05 C, and record a voltage V1 after leaving it for 5 minutes; then discharge it at 1/3 C for 30 s, and record a voltage V2, so (V2-V1)/1/3 C, and acquire an internal resistance DCR of the battery.

5) Test of 2 C rate performance: at 25 °C, charge the secondary battery of each embodiment and comparative example at a constant current rate of 0.33C to 4.20 V, then charge it at a constant voltage to a current of 0.05 C, stand for 5 minutes and record a charge capacity at this time, that is, a first charge capacity; stand for 5 minutes, then discharge it to 2.8 V at a constant current rate of 0.33 C, and stand for 30 min; then charge the secondary battery at a rate of 2 C to 4.20 V at a constant current, then charge it at a constant voltage to a current of 0.05 C, and stand for 5 minutes and record a charge capacity at this time.

Capacity retention rate (%) of battery at 2 C charge rate=2 C charge capacity/0.33 C charge capacity$\times$100%.

6) Test of capacity retention rate of battery: test process of the capacity retention rate of the battery is as follows: at 25 °C, charge the battery corresponding to embodiments with a constant current of 1/3 C to 3.65 V, then charge it at a constant voltage of 3.65 V to a current of 0.05 C, stand for 5 minutes, then discharge it at 1/3 C to 2.7 V, and record a resulting capacity as an initial capacity C0. Repeat the above steps for the same battery aforesaid, while recording a discharge capacity Cn of the battery after the nth cycle, then after each cycle, a battery capacity retention rate is Pn=Cn/C0*100%. During the test, the first cycle corresponds to n=1, the second cycle corresponds to n=2, ... the 100th cycle corresponds to n=100. The battery capacity retention rate data corresponding to embodiment 1 in Table 1 is the data measured after 800 cycles under the above test conditions, that is, a value of P800. The test process of other embodiments and comparative examples is the same as the above.

The prepared positive electrode sheet and the battery in each embodiment is tested, and test results are shown in Table 1.

Table 1: Performance Tests of Positive Electrode Sheet and Battery of Embodiments 1-16 and Comparative Examples 1-4.

| Sequence number | Slurry system | Property of positive electrode sheet | | | | | | | | | Performance of lithium ion secondary battery | | |
|---|---|---|---|---|---|---|---|---|---|---|---|---|---|
| | Aqueous/Solvent | Surface porosity/% | Internal porosity/% | r1 | Surface average particle size/μm | Inner average particle size/μm | r2 | r1/r2 | r1×r2 | Membrane resistance/Ω | Battery direct current impedance DCR/Ω | Rate performance (%) | Battery capacity retention rate/% |
| Embodiment 1 | Aqueous | 10.3 | 5.1 | 2.02 | 0.8 | 0.5 | 1.6 | 1.3 | 3.2 | 0.87 | 1.98 | 78 | 97.9 |
| Embodiment 2 | Aqueous | 14.6 | 4.9 | 2.98 | 1.2 | 0.5 | 2.4 | 1.2 | 7.2 | 1.03 | 1.87 | 76 | 96.2 |
| Embodiment 3 | Aqueous | 19.8 | 5.5 | 3.60 | 1.6 | 0.5 | 3.2 | 1.1 | 11.5 | 1.19 | 1.89 | 75 | 95.7 |
| Embodiment 4 | Aqueous | 25.3 | 5.3 | 4.77 | 2.0 | 0.5 | 4.0 | 1.2 | 19.1 | 1.32 | 1.93 | 75 | 95.1 |
| Embodiment 5 | Aqueous | 30.7 | 4.8 | 6.40 | 2.5 | 0.5 | 5.0 | 1.3 | 32.0 | 1.99 | 1.84 | 72 | 94.3 |
| Embodiment 6 | Aqueous | 11.9 | 10.3 | 1.16 | 1.2 | 0.8 | 1.5 | 0.8 | 1.7 | 0.55 | 1.45 | 84 | 98.3 |
| Embodiment 7 | Aqueous | 15.0 | 10.1 | 1.49 | 1.6 | 0.8 | 2.0 | 0.7 | 3.0 | 0.37 | 1.43 | 86 | 98.6 |
| Embodiment 8 | Aqueous | 20.2 | 10.0 | 2.02 | 2.0 | 0.8 | 2.5 | 0.8 | 5.1 | 0.89 | 1.51 | 90 | 97.2 |
| Embodiment 9 | Aqueous | 25.1 | 10.4 | 2.41 | 1.2 | 1.0 | 1.2 | 2.0 | 2.9 | 0.92 | 1.81 | 85 | 97.4 |
| Embodiment 10 | Aqueous | 30.3 | 9.6 | 3.16 | 1.6 | 1.0 | 1.6 | 2.0 | 5.1 | 0.95 | 1.79 | 76 | 97.4 |
| Embodiment 11 | Aqueous | 20.4 | 14.7 | 1.39 | 2.0 | 1.0 | 2.0 | 0.7 | 2.8 | 0.64 | 1.39 | 85 | 98.3 |
| Embodiment 12 | Aqueous | 25.6 | 14.8 | 1.73 | 1.6 | 1.2 | 1.3 | 1.3 | 2.3 | 0.57 | 1.41 | 86 | 98.6 |

| Sequence number | Slurry system | Property of positive electrode sheet | | | | | | | | | Performance of lithium ion secondary battery | | |
|---|---|---|---|---|---|---|---|---|---|---|---|---|---|
| | Aqueous/ Solve nt | Surface porosity/ % | Internal porosity/ % | r1 | Surface average particle size/$\mu$m | Inner average particle size/$\mu$m | r2 | r1/r2 | r1×r2 | Membrane resistance/ $\Omega$ | Battery direct current impedanc e DCR/$\Omega$ | Rate perform anc e (%) | Battery capacit y retentio n rate/% |
| Embodiment 13 | Aqueous | 31.2 | 15.2 | 2.05 | 2.0 | 1.2 | 1.7 | 1.2 | 3.4 | 0.44 | 1.42 | 87 | 98.5 |
| Embodiment 14 | Aqueous | 25.4 | 20.3 | 1.25 | 2.5 | 1.2 | 2.1 | 0.6 | 2.6 | 0.34 | 1.43 | 86 | 98.1 |
| Embodiment 15 | Aqueous | 30.8 | 19.7 | 1.56 | 2.0 | 1.5 | 1.3 | 1.2 | 2.0 | 0.38 | 1.42 | 88 | 98.4 |
| Embodiment 16 | Aqueous | 31.2 | 24.9 | 1.25 | 2.5 | 1.5 | 1.7 | 0.7 | 2.1 | 0.62 | 1.39 | 90 | 98.5 |
| Comparative example 1 | Aqueous | 11.8 | 15.0 | 0.79 | 0.8 | 1.0 | 0.8 | 1.0 | 0.6 | 3.05 | 4.12 | 60 | 79.6 |
| Comparative Example 2 | Aqueous | 11.6 | 15.7 | 0.74 | 1 | 0.8 | 1.25 | 0.6 | 0.9 | 4.1 | 3.58 | 58 | 78.2 |
| Comparative Example 3 | Aqueous | 15 | 15 | 1 | 0.8 | 0.8 | 1 | 1.0 | 1.0 | 2.15 | 3.38 | 58 | 82.2 |
| Comparative Example 4 | Solvent NMP | 15 | 15 | 1 | 0.8 | 0.8 | 1 | 1.0 | 1.0 | 3.45 | 5.14 | 39 | 75.5 |

As can be seen from Table 1, for the lithium ion secondary battery of embodiments 1-16 of the present invention, when the porosity of the surface area of the positive electrode active substance layer of the positive electrode sheet therefore is greater than the porosity of the inner area of the positive electrode active substance layer of the positive electrode sheet, and the average particle size of the positive electrode active material in the surface area is larger than the average particle size of the positive electrode active material in the inner area, the low membrane resistance and direct current impedance, the high rate performance and battery capacity retention rate are acquired.

In contrast, in the positive electrode active substance layer of the positive electrode sheet of comparative example 1, the porosity of the surface area is smaller than the porosity of the inner area, and the average particle size of the positive electrode active material in the surface area is smaller than the average particle size of the positive electrode active material in the inner area. If the membrane resistance and direct current impedance increase significantly, the rate performance and battery capacity retention rate decrease significantly. In the positive electrode active substance layer of the positive electrode sheet of comparative example 2, the average particle size of the positive electrode active material in the surface area is greater than the average particle size of the positive electrode active material in the inner area, but the porosity of the surface area is still smaller than the porosity of the inner area. The results show that the membrane resistance and direct current impedance are still significantly greater than those in embodiments 1-16 of the present invention, while the rate performance and battery capacity retention rate are still significantly lower than those in embodiments 1-16 of the present invention.

Comparative example 3 has adopted the same porosity and the average particle size of the positive electrode active material for the surface area and the inner area, and the results show that it is worse than the embodiments of the present invention in terms of membrane resistance, direct current impedance, rate performance, and battery capacity retention rate performance. As for comparative example 4, the structure of the positive electrode active substance layer of the positive electrode sheet thereof is basically the same as that of comparative example 3, but the solvent adopts NMP instead of deionized water, and the performance thereof is deteriorated to a certain extent compared with comparative example 3.

In addition, for a ratio r1 of the porosity in the surface area to the porosity the inner area and a ratio r2 of the average particle size of the positive electrode active material in the surface area to the average particle size of the positive electrode active material in the inner area, when the two are kept within a certain range, especially a product $r1 \times r2$ of the two is kept within a range of 1.8 to 8, the acquired battery may achieve better results in terms of membrane resistance, direct current impedance, rate performance, and battery capacity retention rate performance.

Although the present application has been described with reference to the embodiments, various modifications can be made thereto without departing from the scope of the present application, and the components therein may be replaced with equivalents. In particular, the technical features mentioned in each embodiment may be combined in any manner, as long as there is no structural conflict. The present application is not limited to the specific embodiments disclosed herein, but includes all technical solutions falling within the scope of the claims.

**Claims**

1.  An aqueous positive electrode sheet, comprising a current collector and a positive electrode active substance layer provided on at least one surface of the current collector, the positive electrode active substance layer comprising an aqueous binder,
    wherein the porosity of a surface area of the positive electrode active substance layer is greater than the porosity of an inner area of the positive electrode active substance layer, and the average particle size of the positive electrode active material in the surface area is greater than the average particle size of the positive electrode active material in the inner area.

2.  The positive electrode sheet according to claim 1, wherein the thickness of the positive electrode active substance layer is H, a ratio of the porosity in an area of H/3 from a surface in the positive electrode substance material layer to the porosity in an area of H/3 from the current collector in the positive electrode active substance layer is r1, and r1 is 1.05-6.5, optionally 1.2-2.5.

3.  The positive electrode sheet according to claim 2, wherein the porosity in the area of H/3 from the surface in the positive electrode active substance layer is 10%-30%, and/or
    the porosity in the area of H/3 from the current collector in the positive electrode active substance layer is 5%-25%.

4.  The positive electrode sheet according to any one of claims 1 to 3, wherein the thickness of the positive electrode active substance layer is H, a ratio of the average particle size of the positive electrode active material in the area of H/3 from the surface in the positive electrode active substance layer to the average particle size of the positive electrode active material in the area of H/3 from the current collector in the positive electrode active substance layer is r2, and r2 is 1.05-5, optionally 1.2-2.5.

5. The positive electrode sheet according to claim 4, wherein the average particle size of the positive electrode active material in the area of H/3 from the surface in the positive electrode active substance layer is 0.8-2.5 $\mu$m, and/or the average particle size of the positive electrode active material in the area of H/3 from the current collector in the positive electrode active substance layer is 0.5-1.5 $\mu$m.

6. The positive electrode sheet according to any one of claims 4 to 5, wherein a value of r1 $\times$r2 is 1.2 to 50, optionally 1.5 to 10, and further optionally 1.5 to 6.

7. The positive electrode sheet according to any one of claims 4 to 5, wherein a ratio of r1/r2 is 0.3 to 1.5, optionally 0.5 to 1.0.

8. The positive electrode sheet according to any one of claims 1 to 7, wherein the positive electrode active substance layer comprises a conductive agent, the layer in the area of H/3 from the surface in the positive electrode active substance layer comprises the aqueous binder of 1 to 5 parts by weight and the conductive agent of 1 to 5 parts by weight, based on the total weight of the layer in the area; optionally, the layer comprises the aqueous binder of 2 to 4 parts by weight and the conductive agent of 2 to 3 parts by weight, based on the total weight of the layer in the area.

9. The positive electrode sheet according to any one of claims 1 to 7, wherein the positive electrode active substance layer comprises the conductive agent, the layer in the area of H/3 from the current collector in the positive electrode active substance layer comprises the aqueous binder of 2 to 6 parts by weight and the conductive agent of 1 to 5 parts by weight, based on the total weight of the layer in the area; optionally, the layer comprises the aqueous binder of 3 to 5 parts by weight and the conductive agent of 2 to 3 parts by weight, based on the total weight of the layer in the area.

10. The positive electrode sheet according to any one of claims 1 to 9, wherein the conductive agent comprises one or more of conductive carbon black, superconducting carbon black, conductive graphite, acetylene black, Ketjen black, graphene, and carbon nanotubes.

11. The positive electrode sheet according to any one of claims 1 to 10, wherein the positive electrode active substance layer further comprises the positive electrode active material, and the positive electrode active material comprises one or more of lithium iron phosphate, lithium manganese phosphate, lithium cobalt phosphate, lithium iron manganese phosphate, lithium cobalt oxide, lithium nickel oxide, lithium manganese oxide, lithium nickel manganese oxide, lithium nickel cobalt manganese oxide, and lithium nickel cobalt aluminum oxide.

12. The positive electrode sheet according to any one of claims 1 to 11, wherein the aqueous binder comprises soluble polysaccharides and derivatives thereof, water-soluble or water-dispersed high polymers or mixtures thereof.

13. The positive electrode sheet according to any one of claims 1 to 12, wherein the aqueous binder is methylcellulose and salt thereof, xanthan gum and salt thereof, chitosan and salt thereof, alginate and salt thereof, polyethyleneimine and salt thereof, polyacrylamide, acrylonitrile-acrylic acid copolymers and derivatives thereof, or mixtures thereof.

14. The positive electrode sheet according to any one of claims 1 to 13, wherein the aqueous binder is a compound mixture of the xanthan gum and the polyethyleneimine, a ratio of the xanthan gum to the polyethyleneimine is 2:1-1:15, optionally 1:2-1:14; optionally, the average molecular weight Mn of the xanthan gum is 300000-2000000 g/mol, and the average molecular weight Mn of the polyethyleneimine is 2000-50000g/mol.

15. The positive electrode sheet according to any one of claims 1 to 14, wherein a membrane resistance of the positive electrode sheet is 0.3 to 2 $\Omega$; optionally, the membrane resistance is 0.3 to 1 S2.

16. The positive electrode sheet according to any one of claims 1 to 15, wherein the positive electrode active substance layer is formed by multi-layer die head extrusion coating process.

17. A secondary battery, comprising the aqueous positive electrode sheet according to any one of claims 1 to 16.

18. A battery pack, comprising the secondary battery according to claim 17.

19. A power consumption apparatus, comprising the secondary battery according to claim 17 or the battery pack according to claim 18.

thickness H
of film
layer

Current
collector

FIG. 1

5

FIG. 2

5

53

52
52

51

FIG. 3

FIG. 4

FIG. 5

FIG. 6

## INTERNATIONAL SEARCH REPORT

| International application No. |
| --- |
| **PCT/CN2021/142610** |

**A.    CLASSIFICATION OF SUBJECT MATTER**

H01M 4/505(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 孔隙率, 空隙率, 粒径, 尺寸, 正极, 阴极, porosity, size, grain, diameter, cathode, positive

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2014143063 A (TOYOTA MOTOR CORP.) 07 August 2014 (2014-08-07) description, paragraphs 17-112, and figure 3 | 1-19 |
| A | CN 110660965 A (FUNENG TECHNOLOGY (GANZHOU) CO., LTD.) 07 January 2020 (2020-01-07) entire document | 1-19 |
| A | KR 20190029187 A (HYUNDAI MOTOR CO., LTD. et al.) 20 March 2019 (2019-03-20) entire document | 1-19 |
| A | JP 2016058187 A (TOYOTA MOTOR CORP.) 21 April 2016 (2016-04-21) entire document | 1-19 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 August 2022** | **29 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/142610** |

| Patent document cited in search report | | | Publication date (day/month/year) | Patent family member(s) | | | Publication date (day/month/year) |
| --- | --- | --- | --- | --- | --- | --- | --- |
| JP | 2014143063 | A | 07 August 2014 | None | | | |
| CN | 110660965 | A | 07 January 2020 | WO | 2021037266 | A1 | 04 March 2021 |
| KR | 20190029187 | A | 20 March 2019 | US | 2019081321 | A1 | 14 March 2019 |
| JP | 2016058187 | A | 21 April 2016 | US | 2017256776 | A1 | 07 September 2017 |
| | | | | CN | 106663774 | A | 10 May 2017 |
| | | | | DE | 112015004095 | T5 | 18 May 2017 |
| | | | | WO | 2016038438 | A1 | 17 March 2016 |
| | | | | KR | 20170033443 | A | 24 March 2017 |

Form PCT/ISA/210 (patent family annex) (January 2015)